Europäisches Patentamt

European Patent Office

Office européen des brevets

(11) Publication number: **0 226 432**
A2

# EUROPEAN PATENT APPLICATION

(21) Application number: 86309568.3

(22) Date of filing: 09.12.86

(51) Int. Cl.⁴: **B01D 13/00** , B01D 19/00

(30) Priority: 10.12.85 US 807159
18.02.86 US 830657

(43) Date of publication of application:
24.06.87 Bulletin 87/26

(84) Designated Contracting States:
AT BE CH DE FR GB IT LI LU NL SE

(71) Applicant: **ALBANY INTERNATIONAL CORP.**
**1 Sage Road**
**Menands New York 12204(US)**

(72) Inventor: **Coplan, Myron J.**
**47 Speen Street**
**Natick Massachusetts 01760(US)**

(74) Representative: **Hill, Cecilia Ann et al**
**Abel & Imray Northumberland House 303-306**
**High Holborn**
**London, WC1V 7LH(GB)**

(54) Removal of dissolved gases in liquid separation systems.

(57) A separatory system for liquids, wherein liquids under pressure pass through a membrane, contains: a liquid source (10), a prefiltration device (12), a holding tank (14), a feed line (16) from the holding tank to the separatory system, a vacuum line (18) from the holding tank to a venturi tube (20) which is a vacuum source, and the membrane separatory system (26). Rejectate liquid (28) from the separatory system (26) is passed through the venturi tube - (20) so that a vacuum is created in the line (18). The vacuum is communicated to the feed liquid in the holding tank (14) so that dissolved gases therein are removed thereby increasing the permeability rate of the membrane.

## Removal of Dissolved Gases in Liquid Separation Systems

The present invention pertains to systems for liquid separation and more particularly to a separation system wherein dissolved gases are removed from liquids to prevent blockage of membrane pores.

The use of membranes to effect separation of liquid/liquid, and liquid/solid mixtures and solutions has achieved general industrial applicability by various methods, among them being ultrafiltration, hyperfiltration, reverse osmosis, dialysis. See eg, US Patent No 4,207,192 (Coplan). In general, membrane elements associated with these processes are contained in vessels called modules, comprising a container having various inlet and outlet ports and an assembly of membranes within said container. The internal configurations are so arranged as to permit the introduction of a feed stream, with or without pressure, on the upstream face of the membranes, means for collecting permeate which passes through the membranes and emerges on their downstream faces, and means for keeping feed and permeate materials from commingling.

During the pumping of feed liquids under pressure through membranes used for reverse osmosis or ultrafiltration, dissolved gases in the feed may come out of solution. This occurs over extremely short transmembrane traverse distances, on the order of fractions of a micron, as the highly pressurized feed on the upstream side of a membrane markedly drops in pressure as the permeate passes through the rejection barrier. The latter may be either an asymmetric skin or the separate coating of a composite membrane. Individual gas molecules, commonly oxygen or nitrogen molecules from dissolved air, are on the order of 3-4 Angstrom units in diameter, while the intermolecular spaces between the molecules of the polymer which comprises the membrane are believed to range from a few Angstrom units up to voids on the order of 20-60 Angstrom units in diameter. In any event, gas molecules which were in solution under pressure on the upstream side of the separation barrier may come out of solution in the form of miniscule gas bubbles in the layer immediately below the separation layer of the membrane. Depending on the pore size and geometry in the surface immediately downstream of the rejection barrier the desolublized gas may accumulate and be trapped. The result is to tend to obstruct the free passage of some fraction of liquid permeate through the sub-surface of the membrane system. An object of the present invention is to enable this problem to be overcome.

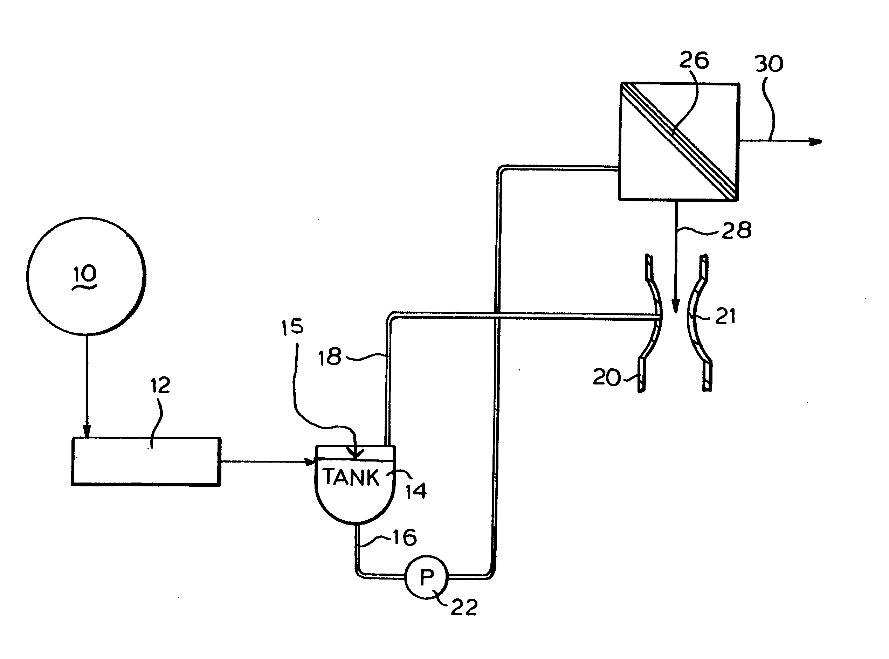

A discussion of the effect of de-airing water on permeability rates through a porous bed is found in Harvard Soil Mechanics, Series No 7, January 1940. The article describes the diminishing of flow with time, as a result of pore blockage, from release of dissolved gases. The graph in Fig. 13 of that article illustrates the vast improvements in permeability of de-aired water as compared to untreated tap water.

In any reverse osmosis system there inevitably is a rejectate under pressure exiting the separatory module. For seawater, for example, about 50-90% of the feed volume leaves the module system at a pressure in excess of the osmotic pressure of the seawater, namely at 600-1000+ psi. The pressure energy of this fluid has considerable work potential, and it is a further object of the present invention to provide a separation system in which this energy can be utilized for energy consumption economy.

It is yet another object of the present invention to enable dissolved gases to be removed from liquids to be used in reverse osmosis or ultrafiltration systems, the gas removal being accomplished in a non-energy consuming manner (eg no boiling, etc).

The present invention provides a membrane separation system for liquids comprising: a feed liquid source; a holding tank for holding the feed liquid, the holding tank being in fluid communication with the feed liquid source; a pressurized liquid separatory arrangement in fluid communication with the holding tank, and a vacuum means for creating a vacuum in fluid communication with the holding tank, so that dissolved gases are removed from the liquid in the holding tank.

More particularly, the invention provides a membrane separation system for liquids comprising: a feed liquid source; a holding tank for holding the feed liquid, the holding tank being in fluid communication with the feed liquid source and having a feed line and a vacuum line extending therefrom, the vacuum line communicating with a space above the surface of the liquid in the holding tank; a pressurized liquid separatory arrangement in fluid communication with the feed line, and a vacuum means for creating a vacuum in the vacuum line so that dissolved gases are removed from the liquid in the holding tank.

In an embodiment of the invention, the high pressure rejectate liquid exiting the membrane separation system is used as a means for creating an injector type venturi vacuum. The vacuum is applied to the holding tank containing the feed liquid - (eg seawater) prior to the feed liquid being pressurized and fed to the separatory arrangement, eg a reverse osmosis module. The object is to strip dissolved gases out of the feed liquid to avoid membrane pore blockage during the separation procedure.

The present invention further provides a method of separating liquids by pressurized separation techniques comprising: providing a feed liquid; passing the feed liquid to a holding tank; removing dissolved gases from the feed liquid held in the holding tank; pumping the feed liquid having dissolved gases removed therefrom to a membrane separation system.

The present invention also provides a method of removing dissolved gases from a liquid comprising the steps of: holding the liquid in a storage means; providing a vacuum line communicating with a space over the surface of the liquid and extending therefrom into fluid communication with a venturi tube; passing a pressurized liquid through the venturi tube thereby creating a vacuum in the vacuum line.

By way of example, a method and a system in accordance with the invention will be described with reference to the accompanying drawing which is a diagram of the system.

The figure shows a feed fluid source 10. The feed fluid may be any liquid solution for which separation is desired, eg seawater. The feed fluid is passed to a prefiltration device 12 which removes suspended impurities from the feed liquid. Next the feed liquid is passed to a holding tank 14 having a feed conduit 16 extending from a bottom portion and a vacuum line 18 extending from an upward portion thereof. The vacuum line is disposed above the surface of the feed liquid 15 that is stored in holding tank 14. Vacuum line 18 extends to an injector-type venturi tube 20.

Feed line 16 draws water from tank 14 and contains a pump 22. Pump 22 provides the high pressures used in conventional membrane separation techniques. Common pressures and flow rates are 800 to 1,200 psi and 10 to 1,000 gallons per minute respectively. The feed liquid is passed into separation system 26. Separation system 26 may be a hollow filament separatory module such as the one described in US Patent No 4,207,192, to Coplan. Arrow 28 represents rejectate liquid exiting separatory system 26, while arrow 30 represents permeate liquid exiting the separatory stem 26, to be collected.

In a typical embodiment of the present invention, rejectate 28 will exit the separatory system 26 at a flow rate of approximately 8 to 800 gallons per minute, while the permeate liquid will exit at a flow rate of approximately 2 to 200 gallons per minute. The rejectate exits separation system 26 having a pressure only modestly less than the inlet pressure of 1,000 psi. The rejectate is passed through injector type venturi tube 20 and, through known principles, creates a relative vacuum at the exit of converging walls 21. The vacuum is communicated to storing tank 14 and to the surface of the feed liquid by vacuum line 18. By reducing the atmospheric pressure over the feed liquid the vacuum line 18 draws dissolved gases from the feed liquid in holding tank 14. Feed liquid, having dissolved gases removed therefrom, is then fed into separatory system 26. The feed liquid will consequently encounter reduced pore blockage (from release of dissolved gases) during membrane separation and, therefore, increased permeability. In this manner the efficiency of the separatory system 26 is improved and greater permeate flow rates are obtained.

## Claims

1. A membrane separation system for liquids comprising: a feed liquid source; a holding tank for holding the feed liquid, the holding tank being in fluid communication with the feed liquid source; a pressurized liquid separatory arrangement in fluid communication with the holding tank, and a vacuum means for creating a vacuum in fluid communication with the holding tank, so that dissolved gases are removed from the liquid in the holding tank.

2. A membrane separation system for liquids comprising: a feed liquid source; a holding tank for holding the feed liquid, the holding tank being in fluid communication with the feed liquid source and having a feed line and a vacuum line extending therefrom, the vacuum line communicating with a space above the surface of the liquid in the holding tank; a pressurized liquid separatory arrangement in fluid communication with the feed line, and a vacuum means for creating a vacuum in the vacuum line so that dissolved gases are removed from the liquid in the holding tank.

3. A membrane separation system according to claim 1 or claim 2, further comprising a means for directing a flow of liquid from the separatory arrangement to the vacuum means.

4. A membrane separation system according to claim 3, wherein the vacuum means is a venturi tube and the means for directing a flow of liquid directs a flow of rejectate liquid under pressure through the venturi tube.

5. A membrane separation system according to any one of the preceding claims, further comprising a prefiltration device located between the feed liquid source and the holding tank and in fluid communication therewith for removing impurities from the feed liquid.

6. A method of separating liquids by pressurized separation techniques comprising: providing a feed liquid; passing the feed liquid to a holding tank; removing dissolved gases from the feed liquid held in the holding tank; pumping the feed liquid having dissolved gases removed therefrom to a membrane separation system.

7. A method in accordance with claim 6, wherein the step of removing dissolved gases from the feed liquid is accomplished by passing a portion of the feed liquid exiting the membrane separation arrangement through a venturi tube to form a vacuum, and communicating the vacuum, via a vacuum line, to a space over the surface of the feed liquid in holding tank.

8. A method in accordance with claim 7, further comprising the step of prefiltering the feed liquid to remove impurities therefrom prior to passing the feed liquid to the holding tank.

9. A method of removing dissolved gases from a liquid comprising the steps of: holding the liquid in a storage means; providing a vacuum line communicating with a space over the surface of the liquid and extending therefrom into fluid communication with a venturi tube; passing a pressurized liquid through the venturi tube thereby creating a vacuum in the vacuum line.

I0. A method of removing dissolved gases from a liquid according to claim 9 further comprising: creating the vacuum by passing rejectate liquid under pressure, exiting from a separation process, through the venturi tube.

0 226 432